# EUROPÄISCHE PATENTSCHRIFT

(11) **EP 2 597 506 B1**
(45) Veröffentlichungstag und Bekanntmachung des Hinweises auf die Patenterteilung: **13.09.2017**
(21) Anmeldenummer: 12194650.3
(22) Anmeldetag: 28.11.2012
(51) Int. Cl.: G02B 27/58, G02B 21/00, G02B 21/06, G02B 21/16, G02B 21/36

(54) **MIKROSKOPBELEUCHTUNGSSYSTEM UND -VERFAHREN**
ILLUMINATING SYSTEM FOR MICROSCOPE AND CORRESPONDING METHOD
ÉCLAIRAGE POUR MICROSCOPES ET PROCÉDÉ CORRESPONDANT

(30) Priorität: 28.11.2011 DE 102011087196
(43) Veröffentlichungstag der Anmeldung: 29.05.2013
(73) Patentinhaber: Leica Microsystems CMS GmbH, 35578 Wetzlar (DE)
(72) Erfinder: Schulz, Christian, 35606 Solms (DE)
(74) Vertreter: m patent group

(56) Entgegenhaltungen:
- EP-A2- 1 857 853
- JP-A- 2003 185 928
- US-A1- 2004 084 426
- US-A1- 2005 174 631

## Beschreibung

Die vorliegende Erfindung betrifft ein Mikroskopbeleuchtungssystem und ein entsprechendes Verfahren zur Bereitstellung einer Mikroskopbeleuchtung für die Lokalisierungsmikroskopie, wobei insbesondere eine Umschaltung in eine andere Beleuchtungsart für Scanmikroskope, insbesondere Konfokalmikroskope, möglich sein soll.

### Stand der Technik

Die Erfindung bezieht sich auf die technische Umsetzung eines Verfahrens der Lokalisierungsmikroskopie zur Überauflösung. Solche Verfahren zeichnen sich dadurch aus, dass bei der Aufnahme eines Bildes immer nur wenige Objektpunkte gleichzeitig Licht aussenden. Liegen die Punkte deutlich weiter voneinander entfernt als die optische Auflösung, kann der Ort dieser Punkte über mathematische Verfahren zur Schwerpunktsbestimmung mit einer Genauigkeit bestimmt werden, die höher ist als die optische Auflösung des verwendeten Objektivs. Werden viele dieser Einzelbilder aufsummiert, bei denen jeweils unterschiedliche Objektpunkte abgebildet werden, kann schließlich das gesamte Objekt mit Überauflösung bildlich dargestellt werden. Bekannte Ausführungsformen solcher Verfahren unterscheiden sich im Hinblick darauf, wie sichergestellt wird, dass nur wenige Objektpunkte gleichzeitig Licht aussenden. Bezeichnungen für solche Verfahren sind beispielsweise PALM, STORM oder GSDIM. Letzteres Verfahren soll nachfolgend kurz beschrieben werden.

GSDIM steht für (engl.) "Ground State Depletion microscopy followed by Individual Molecule return". Für dieses Verfahren werden Fluorophore mit Tripletzuständen (auch "dark states") verwendet. Zunächst wird ein Farbstoffmolekül aus dem Grundzustand in einen angeregten Zustand durch Einstrahlung entsprechender Laserleistung gebracht. Vom angeregten Zustand aus erfolgt ein Übergang in den Tripletzustand, wobei dieser Tripletzustand eine weitaus höhere Lebensdauer (ca. 100 ms) als der angeregte Singletzustand (von nur etwa 3 ns) besitzt, so dass bei ausreichender Lichtintensität die Moleküle im Tripletzustand akkumulieren. Aus dem Tripletzustand gehen die Moleküle unter spontaner Emission in den Grundzustand zurück. Es werden Einzelbilder dieser spontanen Emissionen aufgenommen, wobei die Orte der spontanen Emissionen über die erwähnten mathematischen Verfahren mit einer Genauigkeit bestimmt werden können, die höher ist als die optische Auflösung. Die erreichbare Auflösung liegt zwischen 20 und 25 nm, im Allgemeinen unter 60 nm. Die erzielbare Auflösung hängt auch von der Laserleistung und der Auflösung der verwendeten Kamera ab.

Die technische Hauptvoraussetzung zur Realisierung von GSDIM ist die Fluoreszenzanregung des Präparats mit hoher Lichtleistung. Dies kann über eine geeignete Laserbeleuchtung geschehen. Diese kann wiederum von einer TIRF-Beleuchtungseinrichtung (engl.: "Total Internal Reflection Fluorescence microscopy") bereitgestellt werden, die den Laserstrahl in die Objektivpupille (hintere Objektivbrennebene) fokussiert. Dies hat den Vorteil, dass man eine homogene Ausleuchtung des Präparats bei großer Schärfentiefe der Beleuchtung erhält. Um die Lichtleistung des Lasers optimal auszunutzen, wird der Strahlquerschnitt des Lasers so verkleinert, dass das ausgeleuchtete Präparatfeld im Vergleich zur TIRF-Beleuchtung nur noch etwa ein Viertel beträgt (beispielsweise beträgt der Durchmesser des ausgeleuchteten Präparatfelds ca. 60 µm bei Verwendung eines Objektivs mit Vergrößerung 100-fach, während bei TIRF-Beleuchtung dieser Durchmesser ca. 250 µm beträgt).

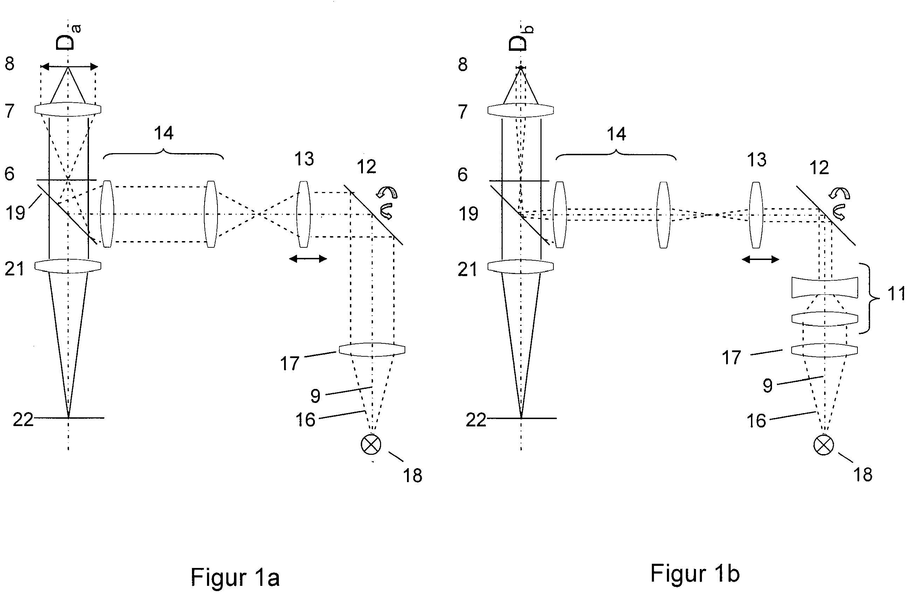

Die Funktionsweise des Umschaltens zwischen TIRF-Beleuchtung und einer Beleuchtung für GSDIM sei im Folgenden anhand der Figuren 1a und 1b schematisch dargestellt.

Zunächst sei zur TIRF-Mikroskopie Folgendes ausgesagt. Üblicherweise wird ein inverses Lichtmikroskop mit einem Ölimmersionsobjektiv mit sehr hoher numerischer Apertur eingesetzt, um den für eine Totalreflexion erforderlichen flachen Einstrahlwinkel erreichen zu können. Die Totalreflexion erfolgt an der Grenzfläche von Deckglas zu Präparat. Im Bereich hinter dem Deckglas bildet sich ein sogenanntes evaneszentes Feld aus, dessen Intensität exponentiell in das Präparat hinein abfällt. Für sichtbares Licht beträgt die typische Eindringtiefe 100 bis 200 nm. Befinden sich innerhalb dieses Bereiches fluoreszierende Moleküle, die Licht der eingestrahlten Wellenlänge absorbieren können, so werden diese zur Emission von Fluoreszenzlicht angeregt. Da die beobachtbare Schicht im Präparat nur 100 bis 200 nm dünn ist, kann eine deutlich höhere Auflösung entlang der optischen Achse des Objektivs erreicht werden als bei normaler Fluoreszenzmikroskopie (Schichtbereiche von typischerweise 500 nm). Bei der TIRF-Mikroskopie wird das Anregungslicht am Rand des Objektivs eingekoppelt, so dass es unter dem erforderlichen flachen Winkel auf das Deckglas fällt.

Figur 1a zeigt schematisch eine typische TIRF-Beleuchtung mit Beleuchtungsstrahlengang 16: Das von einer Lichtquelle 18 (üblicherweise ein Laser) ausgehende Licht (gestrichelt gezeichnet) wird von einer Kollimatoroptik 17 kollimiert. Das kollimierte Licht wird durch das Scanokular 13 fokussiert. Die Transportoptik 14 bildet den Fokus in die hintere Brennebene 6 des Objektivs 7 ab, wobei das Licht vorher noch am Teilerspiegel 19 reflektiert wird. Der Teilerspiegel kann beispielsweise eine physikalische, eine geometrische, eine farbliche oder eine polarisationsartige Teilung erzeugen. Die Transportoptik 14 ist aufgrund der mechanischen Gegebenheiten eines Mikroskopstativs notwendig, da das Scanokular 13 nicht nahe genug an das Objektiv 7 gebaut werden kann, um direkt in dessen hintere Brennebene 6 zu fokussieren. Um Objektive mit verschiedener Lage der hinteren Brennebene verwenden zu können, ist das Scanokular 13 fokussierbar ausgebildet (angedeutet durch einen Pfeil). Das Objektiv 7 bildet den in seine hintere Brennebene 6 fokussierten Laserstrahl in einen Parallelstrahl im Raum des Präparats 8 (Objektraum) ab. Dieser Parallelstrahl leuchtet einen Kreis im Präparat 8 mit Durchmesser Dₐ (typischerweise etwa 250 µm) aus.

Für die TIRF-Mikroskopie ist die Kippbarkeit des (schematisch dargestellten) Scanspiegels 12 entscheidend. Durch Verkippen des Scanspiegels 12 (angedeutet durch zwei Pfeile) wird der Fokus in der hinteren Brennebene 6 senkrecht zur optischen Achse des Objektivs verschoben. Dies bewirkt, dass der Laserstrahl das Präparat 8 unter einem Winkel durchsetzt, der abhängig von der Verkippung des Scanspiegels 12 ist. Ist dieser Winkel größer als der Winkel der Totalreflexion zwischen Deckglas und Präparatmedium, spricht man - wie oben erläutert - von TIRF-Mikroskopie.

Das so beleuchtete Präparat sendet nun Fluoreszenzlicht aus (durchgezogen gezeichnet). Dieses Licht passiert den Strahlteiler 19 und erzeugt mittels einer Tubuslinse 21 ein Bild 22.

Figur 1b zeigt eine typische Beleuchtung für ein GSDIM-Verfahren. Entscheidend ist hierfür eine hohe Laserleistung pro ausgeleuchtetem Präparatbereich. Die Laserleistung muss folglich auf einem stark reduzierten Präparatdurchmesser D_{b} (typischerweise ca. 60 µm) zur Wirkung kommen. Dies kann durch Modifikation der anhand von Figur 1a erläuterten TIRF-Beleuchtung in einer Weise geschehen, dass zwischen TIRF- und GSDIM-Beleuchtung umgeschaltet werden kann. Hierzu wird in der oben erläuterten TIRF-Beleuchtungseinrichtung vor dem Scanspiegel 12 ein den Strahldurchmesser verkleinerndes Fernrohr 11 (gestrichelt gezeichnet) in den Strahlengang eingeklappt. Damit reduziert sich der im Präparat ausgeleuchtete Kreis auf einen Durchmesser D_{b}, hier von etwa 60 µm, womit die Leistungsdichte um einen Faktor von ca. 18 erhöht wird. Üblicherweise trifft der Laserstrahl unter normaler Inzidenz auf das Präparat 8. In seltenen Fällen wird eine Beobachtung mit gekipptem Scanspiegel 12 vorgenommen. Im Übrigen sei auf die Erläuterungen zu Figur 1a verwiesen.

Die oben beschriebene bekannte Lösung der Umschaltung von TIRF-Beleuchtung auf GSDIM-Beleuchtung hat zwar den Vorteil, dass diese relativ einfach durch Einklappen eines Fernrohrs bewerkstelligt werden kann, jedoch hat diese Lösung folgende Nachteile: Die GSDIM-Mikroskopie wird nur sehr selten unter TIRF-Bedingungen, also mit gekipptem Scanspiegel 12, vorgenommen. Schwerer wiegt, dass die TIRF-Mikroskopie an sich bereits eine relativ seltene Anwendung ist, so dass eine Koppelung mit der GSDIM-Mikroskopie nicht sinnvoll erscheint. Die meisten Anwender, die an der Lokalisierungsmikroskopie interessiert sind, sehen sich somit gezwungen, eine aufwendige TIRF-Beleuchtungseinrichtung mit zu kaufen, die sie selten benutzen werden.

Eine weitere Anwendung ist die Konfokalmikroskopie. Hierzu wird auf den umfangreichen Stand der Technik verwiesen. In der Konfokalmikroskopie wird im Gegensatz zu der konventionellen Lichtmikroskopie (auch "Widefield-Mikroskopie") nicht das gesamte Präparat beleuchtet, sondern zu jedem Zeitpunkt nur ein Ausschnitt bzw. Punkt des Präparats. Mit einem geeignet fokussierten Laser bzw. einer Punktlichtquelle wird das Präparat über das Mikroskopobjektiv punktförmig beleuchtet und gescannt. Auf diese Weise können die Lichtintensitäten des reflektierten Lichtes nacheinander an allen gescannten Orten des Präparates gemessen werden. Anschließend wird hieraus ein Bild des Präparates konstruiert. Aufgrund ihrer hohen axialen Auflösung erlauben Konfokalmikroskope die Aufnahme von vielen solcher Bilder in verschiedenen Schärfeebenen (Fokusebenen) und somit die Erstellung eines scharfen dreidimensionalen Bildes. Hierzu wird das Anregungslicht des Lasers bzw. der Punktlichtquelle in das Präparat in verschiedene Fokusebenen hineinfokussiert. Das von dem Präparat reflektierte Licht wird in der Regel durch das gleiche Objektiv, mit dem es auf das Präparat fokussiert wird, auf eine Lochblende abgebildet, von der aus es auf einen Detektor gelangt. Anregungs- und Detektionsfokus liegen konfokal, das heißt übereinander. Daher der Name Konfokalmikroskopie. Licht aus Ebenen außerhalb der Fokusebene kann nicht durch die Lochblende auf den Detektor gelangen. Durch Scannen des Präparats in x-y-Richtung, also in einer Ebene senkrecht zur optischen Achse des Objektivs (z-Richtung) erhält man somit das Bild des Präparats in der gewählten Fokusebene (z=z₀).

Aus der US 7,187,494 B2 ist ein Mikroskopsystem bekannt, das eine Umschaltung von der TIRF-Mikroskopie in die Konfokalmikroskopie ermöglicht. In Figur 6 dieser Schrift wird ein typischer Aufbau eines Laserscanning-Mikroskops zur Konfokalmikroskopie dargestellt. Figur 7 dieser Schrift zeigt den typischen Aufbau eines TIRF-Mikroskops. Ausgehend von einer in Figur 8 dieser Schrift dargestellten Kombination aus einem Konfokalmikroskop und einem TIRF-Mikroskop beschäftigt sich dieses US-Patent mit einer alternativen Lösung für eine solche Kombination unter Einsatz einer in den Strahlengang des Konfokalmikroskops einbringbaren Optik, um das Laserlicht in die hintere Brennebene des Objektivs zu fokussieren, wobei die Hauptstrahlen am Ort der hinteren Brennebene parallel zur optischen Achse verlaufen. Letztere Bedingung ist für TIRF-Beleuchtung notwendig. Als alternative Ausführungsform der genannten Kombination ist in dieser Patentschrift die Verwendung eines kompletten Umlenkstrahlengangs beschrieben, um zwischen TIRF- und Konfokalmikroskopie umschalten zu können.

Aus der US 7,551,351 B2 ist ein Mikroskop mit TIRF-Beleuchtung zur optischen Manipulation eines Präparats bekannt. In dieser Schrift wird ein Mikroskopsystem vorgeschlagen, dessen Beleuchtung zwischen TIRF-Beleuchtung und Manipulationslaser-Beleuchtung umgeschaltet werden kann. Der Manipulationslaser dient zum Bleichen, Markieren und/oder zur Mikrodissektion. Mittels eines in den Strahlengang des TIRF-Lasers einschwenkbaren Spiegels oder einer zuschaltbaren Linse kann zwischen TIRF-Beleuchtung und Lasermanipulationsbeleuchtung umgeschaltet werden.

Aus der DE 199 012 19 A1 ist eine optische Anordnung im Beleuchtungsstrahlengang eines konfokalen Lasermikroskops bekannt, die dem optimalen Ausleuchten bei Reduzierung von Verlusten des Anregungslichtes dient. Hierzu ist dem Laser des konfokalen Mikroskops eine Linse mit nachgeschalteter Vario-Optik nachgeordnet. Mittels dieser Anordnung wird der schmale Querschnitt des parallelen Laserstrahlengangs aufgeweitet. Der derart aufgeweitete Strahl wird auf einen Scanspiegel gelenkt, der ihn seinerseits in Richtung Objektiv leitet. Das Objektiv fokussiert den durch seine Eintrittspupille fallenden Strahl auf das Objekt. Mittels des genannten Vario-Objektivs kann der Beleuchtungsdurchmesser des Beleuchtungsstrahlengangs zur Vermeidung von Lichtverlusten mehr oder weniger exakt auf die Eintrittspupille des jeweils verwendeten Objektivs angepasst werden.

Aus der EP 1 857 853 A2 ist eine Mikroskopbeleuchtungeinrichtung bekannt, bei der von einer Laserscanning-Mikroskopbeleuchtungsart hin zu einer Weitfeld-Mikroskopbeleuchtungsart umgeschaltet werden kann.

Der vorliegenden Erfindung liegt die Aufgabe zugrunde, eine geeignete nicht-konfokale Beleuchtung für die Lokalisationsmikroskopie, insbesondere für ein GSDIM-Verfahren, bereitzustellen, die unabhängig von einer TIRF-Beleuchtung einsetzbar ist. Insbesondere soll eine solche Beleuchtung in eine für die Konfokalmikroskopie geeignete Beleuchtung umschaltbar sein.

### Kurzfassung der Erfindung

Diese Aufgabe wird gelöst durch ein Mikroskop mit einem Mikroskopbeleuchtungssystem, eine Verwendung desselbigen sowie ein Verfahren zur Mikroskopbeleuchtung gemäß den unabhängigen Patentansprüchen. Vorteilhafte Ausgestaltungen ergeben sich aus den jeweiligen Unteransprüchen sowie der nachfolgenden Beschreibung.

### Vorteile der Erfindung

Erfindungsgemäß wird ein Mikroskop mit einem Mikroskopobjektiv und einem Mikroskopbeleuchtungssystem für die Lokalisationsmikroskopie, die im Folgenden allgemeiner auch als zweite Art der Mikroskopbeleuchtung bezeichnet werden soll, zur Verfügung gestellt, wobei zwischen einer ersten Art der Mikroskopbeleuchtung, nämlich einer Laserscanning-Mikroskopbeleuchtungsart, und dieser zweiten Art der Mikroskopbeleuchtung umgeschaltet werden kann. Dieses erfindungsgemäße Mikroskop weist die Merkmale gemäß Anspruch 1 auf.-

Aufgrund besagter Scanspiegeleinrichtung eignet sich die erste Mikroskopbeleuchtungsart für die Laserscanningmikroskopiebeleuchtung, insbesondere also für die Konfokalmikroskopie, während sich die zweite Mikroskopbeleuchtungsart für die Lokalisationsmikroskopie, insbesondere für das bereits Eingangs geschilderte Verfahren der GSDIM, eignet.

Während der bisher bekannte Stand der Technik lediglich Mikroskopbeleuchtungssysteme bereitstellt, die eine TIRF-Beleuchtungseinrichtung aufweisen, wobei durch geeignete Maßnahmen diese in eine Beleuchtungseinrichtung für Konfokalmikroskopie bzw. in eine für Lokalisationsmikroskopie umgeschaltet werden kann, schlägt die Erfindung eine Kombination von Mikroskopbeleuchtungsarten vor, die sich insbesondere für die Konfokalmikroskopie und die Lokalisationsmikroskopie eignen. Der Vorteil dieser Kombination ist, dass Konfokalmikroskope anerkannter Stand der Technik für die Hochauflösung der optischen Fluoreszenzmikroskopie sind und für quantitative Fragestellungen bei gleichzeitig höchster optischer Auflösung verwendet werden. Die Eingangs beschriebene Lokalisations- oder Lokalisierungsmikroskopie stößt in die gleiche Richtung, so dass es für den Anwender enorme Vorteile bietet, ein Konfokalmikroskop mit einem Lokalisierungsmikroskop kombinieren zu können. Insbesondere können für die entsprechenden Mikroskopbeleuchtungsarten dieselben Laser eingesetzt werden.

Die Erfindung trägt den unterschiedlichen optischen Abbildungsverhältnissen in den beiden beschriebenen Mikroskopbeleuchtungsarten Rechnung und nimmt eine entsprechende Anpassung in einer Weise vor, dass zwischen den beiden Mikroskopbeleuchtungsarten umgeschaltet werden kann.

Ohne Beschränkung der Allgemeinheit sei zum Zwecke der näheren Erläuterung bei der ersten Mikroskopbeleuchtungsart von einer Konfokalmikroskopiebeleuchtug ausgegangen. In gleicher Weise sei bezüglich der zweiten Mikroskopbeleuchtungsart von einer Mikroskopbeleuchtung für GSDIM ausgegangen. Nachfolgend sei die Umschaltung einer konfokalen Mikroskopiebeleuchtung in eine GSDIM-Beleuchtung beschrieben. Diese Beschreibung kann selbstverständlich umgekehrt für eine Umschaltung von einer GSDIM-Beleuchtung in eine Konfokalmikroskopiebeleuchtung herangezogen werden. Beide Richtungen der Umschaltung sind gleichwertig.

Eine Beleuchtungsquelleneinrichtung dient zunächst zur Erzeugung eines parallel zur optischen Achse verlaufenden Beleuchtungsstrahlengangs. Für die Konfokalmikroskopie wird in der Regel ein kollimierter Laserstrahl verwendet. Dazu ist zur Bereitstellung der ersten, nämlich konfokalen Mikroskopbeleuchtungsart eine Fernrohroptik im Beleuchtungsstrahlengang angeordnet, welche den Beleuchtungsstrahlengang im Durchmesser aufweitet.

Dieser parallel zur optischen Achse verlaufende Beleuchtungsstrahlengang (aufgeweiteter Laserstrahl) trifft auf eine Scanspiegeleinrichtung, mit der in bekannter Weise der Beleuchtungsstrahlengang in einer Ebene senkrecht zur optischen Achse abgelenkt werden kann. Wird die optische Achse mit der z-Richtung identifiziert, so handelt es sich bei besagter Ebene um die x-y-Ebene. Diese Scanspiegeleinrichtung dient in der oben beschriebenen Weise dazu, das zu untersuchende Präparat in einer Fokusebene abzuscannen.

Als weitere Komponenten weist die Mikroskopbeleuchtungseinheit ein Scanokular und eine nachgeschaltete Scantubuslinse auf. Bei beiden Komponenten kann es sich um Einzellinsen oder um zusammengesetzte Linsensysteme handeln. Scanokular und Scantubuslinse bewirken gemeinsam zwei Funktionen. Zum Einen wird der Strahldurchmesser aufgeweitet, insbesondere so weit, dass die hintere Brennebene eines Mikroskopobjektivs vollständig ausgeleuchtet wird. Zum Anderen wird die Scanspiegeleinrichtung, die insbesondere einen einzelnen oder mehrere hintereinander geschaltete Scanspiegel aufweist, in die hintere Brennebene des Mikroskopobjektivs abgebildet. Das Objektiv fokussiert den Laserstrahl schließlich auf das Präparat. Eine durch die Scanspiegeleinrichtung vorgenommene Verkippung des Laserstrahls führt bei dieser Anordnung zu einer Verkippung des Laserstrahls am Ort der hinteren Brennebene und somit zu einem Versatz des Fokuspunktes im Präparat senkrecht zur optischen Achse.

Um von dieser ersten, konfokalen Mikroskopbeleuchtungsart in eine zweite, nicht-konfokale Beleuchtungsart, z.B. für die Anwendung eines GSDIM-Verfahrens, umzuschalten, ist erfindungsgemäß das Einbringen einer Fokussierlinse in den Beleuchtungsstrahlengang essentiell, wobei durch diese Fokussierlinse der Laserstrahl nicht mehr in das Präparat, sondern nunmehr in die hintere Brennebene des Mikroskopobjektivs fokussiert wird. Bei der Fokussierlinse kann es sich wiederum um eine Einzellinse oder um ein zusammengesetztes Linsensystem handeln.

Wie bereits erwähnt, weist die Beleuchtungsquelleneinrichtung für die erste, konfokale Beleuchtungsart eine Fernrohroptik zur Aufweitung des Beleuchtungsstrahlengangs auf. Eine solche Aufweitung ist häufig nötig, weil der Laserstrahl, bevor er die Fernrohroptik durchquert, einen akustooptischen Strahlteiler (abgekürzt AOBS) durchläuft, der seinerseits nur einen bestimmten maximalen Strahldurchmesser zulässt, der in der Regel kleiner ist als der am Scanokular benötigte Strahldurchmesser. Die Fernrohroptik dient somit der Aufweitung des Laserstrahls zwischen AOBS und Scanokular.

Zur Bereitstellung der zweiten, nicht-konfokalen Mikroskopbeleuchtungsart wird die Fernrohroptik aus dem Beleuchtungsstrahlengang entfernt. Auf diese Weise wird der Durchmesser des ausgeleuchteten Präparatfeldes reduziert und die Lichtintensität auf dem Präparat um etwa den Faktor 25 erhöht. Diese Anordnung ermöglicht somit, Lokalisierungsmikroskopie mit hohen Beleuchtungsintensitäten durchführen zu können.

Es ist zum einen möglich, die Fokussierlinse zwischen das Scanokular und die Scantubuslinse in den Beleuchtungsstrahlengang einzubringen. Dies ist insbesondere bei den derzeit auf dem Markt befindlichen Konfokalmikroskopen der Anmelderin von Vorteil. Bei anderen Aufbauten ist es prinzipiell auch möglich, die Fokussierlinse zwischen Scantubuslinse und hintere Brennebene des Mikroskopobjektivs einzubringen, solange durch das Einbringen dieser Fokussierlinse der Beleuchtungsstrahlengang in die hintere Brennebene des Mikroskopobjektivs fokussiert wird.

Es ist vorteilhaft, wenn die Fokussierlinse oder - bei mehrgliedrigem Aufbau - ein Teil von ihr in Richtung optischer Achse verschiebbar ausgeführt ist, damit der Fokus an Objektive mit unterschiedlicher Lage der hinteren Brennebene angepasst werden kann.

Zum Umschalten zwischen den beiden genannten Mikroskopbeleuchtungsarten ist es daher zweckmäßig, wenn gleichzeitig oder kurz hintereinander mit dem Einbringen der Fokussierlinse ein Entfernen der Fernrohroptik erfolgt und umgekehrt.

Wie bereits mehrfach ausgeführt, eignet sich das erfindungsgemäße Mikroskopbeleuchtungssystem insbesondere zur Umschaltung zwischen einer Laserscanningmikroskopbeleuchtung insbesondere zur Konfokalmikroskopie, und einer Lokalisationsmikroskopiebeleuchtung insbesondere zu einem GSDIM-Verfahren.

Der Aufbau eines Mikroskops, insbesondere eines Konfokal- oder Lokalisationsmikroskops, ist allgemein aus dem Stand der Technik bekannt. Insoweit wird auf nähere Erläuterungen in diesem Zusammenhang verzichtet. Das vom Präparat ausgesandte Licht (emittierte Fluoreszenzstrahlung im Falle der Konfokalmikroskopie) wird über das Mikroskopobjektiv und weitere nachgeschaltete Optik in eine konfokale Blende fokussiert, um von dort auf einen Detektor zu gelangen.

Bei der Lokalisationsmikroskopie erfolgt die Auskoppelung dieses vom Präparat ausgehenden Beobachtungsstrahlengangs zwischen Scantubuslinse und Objektiv. Zu diesem Zweck ist dort ein Teilerspiegel angeordnet

Die Erfindung betrifft weiterhin ein Verfahren zu Bereitstellung einer Beleuchtung für die Lokalisierungsmikroskopie, wobei diese Beleuchtungsart insbesondere durch Umschalten aus der Konfokalmikroskopiebeleuchtung ermöglicht werden soll. Bezüglich des erfindungsgemäßen Verfahrens sei auf die obigen Erläuterungen im Zusammenhang mit dem erfindungsgemäßen Mikroskop sowie den dort erläuterten Ausgestaltungen und Vorteilen verwiesen. Ausdrücklich ist die dortige Offenbarung für das erfindungsgemäße Verfahren heranzuziehen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Figurenbeschreibung

- Figur 1: zeigt schematisch ein Mikroskop mit Beleuchtungseinrichtung für die TIRF-Beleuchtung (Figur 1a) und für die GSDIM-Beleuchtung (Figur 1b), wobei zwischen den beiden Beleuchtungsarten umgeschaltet werden kann.
- Figur 2: zeigt schematisch eine Mikroskopbeleuchtungseinheit für die Konfokalmikroskopie (Figur 2a) und ein Mikroskop mit Beleuchtungseinheit für ein GSDIM-Verfahren (Figur 2b), wobei zwischen beiden Beleuchtungsarten umgeschaltet werden kann.

Aufbau und Funktionsweise der in den Figuren 1a und 1b dargestellten Beleuchtungseinheiten wurden eingangs in der Beschreibungseinleitung ausführlich erläutert.

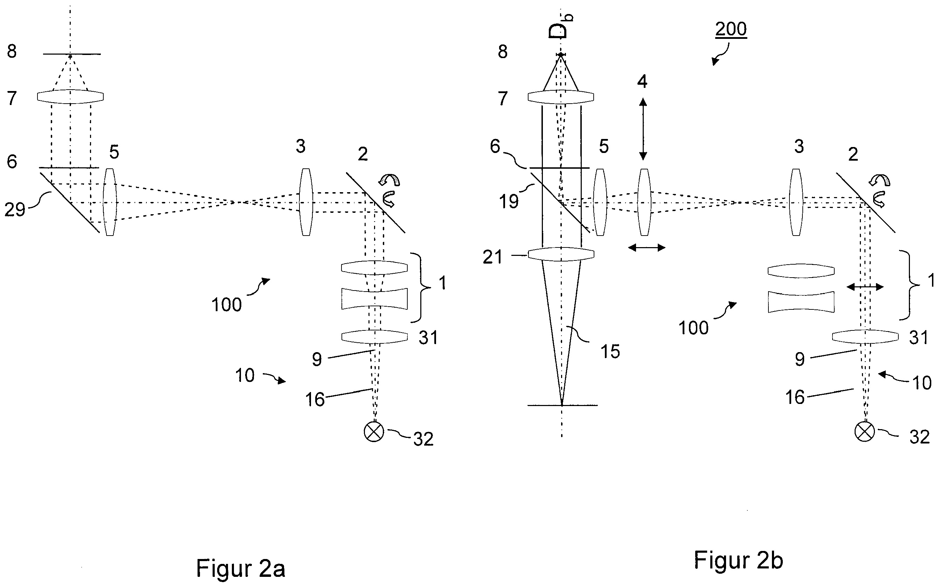

Die Figur 2 zeigt sehr schematisch eine Ausführungsform eines erfindungsgemäßen Mikroskopbeleuchtungssystems, wobei in Figur 2a eine Mikroskopbeleuchtungseinheit 100 für ein Konfokalmikroskop und in Figur 2b diese - entsprechend modifizierte - Mikroskopbeleuchtungseinheit 100 für ein GSDIM-Verfahren dargestellt ist. In beiden Figuren breitet sich der Beleuchtungsstrahlengang 16 ausgehend von der Lichtquelle 32 (üblicherweise ein Laser oder eine andere Punktlichtquelle) zunächst von unten nach oben aus. Eine Kollimatoroptik 31 kollimiert das Licht. Im Folgenden soll von einem Laserstrahl ausgegangen werden, dessen Wellenlänge zur Anregung von Fluoreszenzemissionen im gefärbten Präparat 8 ausgelegt ist.

Die allgemein mit 10 bezeichnete Beleuchtungsquelleneinrichtung weist neben der Lichtquelle 32 und einer Kollimatoroptik 31 in Figur 2a eine Fernrohroptik 1 zur Aufweitung des Laserstrahls, dargestellt als Beleuchtungsstrahlengang 16, auf. Der aufgeweitete Laserstrahl trifft auf eine Scanspiegeleinrichtung 2, hier angedeutet dargestellt als Scanspiegel. Der Scanspiegel kann in zwei Raumrichtungen derart verkippt werden, dass der resultierende Laserstrahl in einer Ebene senkrecht zur optischen Achse 9 verkippt wird. Das Scanokular ist mit 3 bezeichnet. Zwischen der Kollimatoroptik 31 und der Fernrohroptik 1 durchläuft der Laserstrahl in der Regel einen akustooptischen Strahlteiler (AOBS) (nicht dargestellt), der den Beleuchtungsstrahlengang vom Beobachtungsstrahlengang trennt und der nur einen gewissen maximalen Strahldurchmesser zulässt, der kleiner ist als derjenige, der am Scanokular 3 benötigt wird. Daher ist in Figur 2a die Fernrohroptik 1 zur Strahlaufweitung vor dem Scanokular 3 vorgesehen.

Dem Scanokular 3 ist in Figur 2a eine Scantubuslinse 5 sowie ein Spiegel 29 nachgeordnet. Scanokular 3 und Scantubuslinse 5 wirken gemeinsam als weitere Fernrohroptik mit zwei Funktionen. Zum einen wird der Strahldurchmesser nochmals so aufgeweitet, dass die hintere Brennebene 6 des Objektivs 7 vollständig und somit optimal ausgeleuchtet wird. Zum anderen wird der Scanspiegel an den Ort der hinteren Brennebene 6 abgebildet. Die Scanspiegeleinrichtung 2 befindet sich somit an einem zur Brennebene 6 konjugierten Ort. Das Objektiv 7 fokussiert den Laserstrahl schließlich auf das Präparat 8. Das Präparat 8 ist mit Fluorophoren geeignet gefärbt, so dass die auftreffende Laserstrahlung zu einer Fluoreszenzanregung führt. Durch Verkippen des Scanspiegels bzw. durch geeignete Ansteuerung der Scanspiegeleinrichtung 2 wird der Laserstrahlfokus in der Fokusebene des Präparats 8 bewegt, so dass ein Scannen in einer Ebene senkrecht zur optischen Achse 9 möglich ist.

Figur 2b zeigt schematisch die Mikroskopbeleuchtungseinheit 100 aus Figur 2a, die nunmehr zur Bereitstellung einer zweiten Mikroskopbeleuchtungsart, hier für ein GSDIM-Verfahren, in einem Mikroskop 200 eingerichtet ist. Gleiche Komponenten sind mit denselben Bezugszeichen versehen, insofern wird auf eine erneute Erläuterung verzichtet. Bei der dargestellten Ausführungsform gemäß Figur 2b wird zur Umschaltung auf die zweite Mikroskopbeleuchtungsart zunächst eine Fokussierlinse 4 in den Strahlengang 16 gebracht. Diese Fokussierlinse 4 sorgt gemeinsam mit der Scantubuslinse 5 dafür, dass der Laserstrahl in die hintere Brennebene 6 des Mikroskopobjektivs 7 fokussiert wird. In der dargestellten Ausführungsform wird die Fokussierlinse 4 zwischen Scanokular 3 und Scantubuslinse 5 in den Beleuchtungsstrahlengang 16 eingebracht. Der Doppelpfeil unterhalb der Fokussierlinse 4 zeigt an, dass diese in Richtung der optischen Achse 9 verschiebbar ausgeführt ist. Auf diese Weise kann die Lage der Fokussierlinse 4 an unterschiedliche Lagen von Brennebenen 6 angepasst werden, wenn unterschiedliche Objektive 7 eingesetzt werden.

Zeitlich nachfolgend oder zeitgleich zum Einbringen der Fokussierlinse 4 wird die Fernrohroptik 1 aus dem Strahlengang 16 entfernt. Hierdurch kann gewährleistet werden, dass der Beleuchtungsstrahlengang nicht aufgeweitet wird und somit mit hoher Flächenintensität auf das Präparat 8 fällt. Bei der hier dargestellten Mikroskopbeleuchtungsart für ein GSDIM-Verfahren ist kein Verkippen des Scanspiegels in der Scanspiegeleinrichtung 2 erforderlich. Durch Entfernen der Fernrohroptik 1 aus dem Beleuchtungsstrahlengang 16 kann die Intensität auf dem Präparat 8 um das etwa 25-fache gesteigert werden. Derartige Leistungsdichten sind notwendig, um ausreichend Anregungsenergie auf die bestrahlte Präparatfläche zu bringen.

### Bezugszeichenliste

- 1: Fernrohroptik
- 2: Scanspiegeleinrichtung
- 3: Scanokular
- 4: Fokussierlinse
- 5: Scantubuslinse
- 6: hintere Brennebene des Objektivs
- 7: Objektiv
- 8: Präparat
- 9: optische Achse
- 10: Beleuchtungsquelleneinrichtung
- 11: Fernrohr
- 12: Scanspiegel
- 13: Scanokular
- 14: Transportoptik
- 15: Beobachtungsstrahlengang
- 16: Beleuchtungsstrahlengang
- 17: Kollimatoroptik
- 18: Lichtquelle
- 19: Teilerspiegel
- 21: Tubuslinse
- 22: Bild
- 29: Spiegel
- 31: Kollimatoroptik
- 32: Lichtquelle, Laserstrahlenquelle

- 100: Mikroskopbeleuchtungseinheit
- 200: Mikroskop

## Patentansprüche

1. Mikroskop mit einem Mikroskopobjektiv (7) und mit einem Mikroskopbeleuchtungssystem zur Umschaltung zwischen einer Laserscanning- und einer Lokalisations-Mikroskopbeleuchtungsart mit einer Mikroskopbeleuchtungseinheit (100), die zur Bereitstellung der Laserscanning-Mikroskopbeleuchtungsart aufweist:
eine Beleuchtungsquelleneinrichtung (10) zur Erzeugung eines kollimierten, parallel zur optischen Achse (9) verlaufenden Beleuchtungsstrahlengangs (16),
eine Scanspiegeleinrichtung (2) zur Ablenkung des Beleuchtungsstrahlengangs (16) in einer Ebene senkrecht zur optischen Achse (9),
ein Scanokular (3) und eine nachgeschaltete Scantubuslinse (5) zur Abbildung der Scanspiegeleinrichtung (2) in eine hintere Brennebene (6) eines Mikroskopobjektivs (7) und zur Aufweitung des Beleuchtungsstrahlengangs (16), wobei das Mikroskopobjektiv (7) diesen auf ein zu untersuchendes Präparat (8) fokussiert,
wobei diese Mikroskopbeleuchtungseinheit (100) zur Bereitstellung der Lokalisations-Mikroskopiebeleuchtungsart eine Fokussierlinse (4) aufweist, die so ausgebildet ist, dass sie in den Beleuchtungsstrahlengang (16) derart eingebracht werden kann, dass dieser in die hintere Brennebene (6) des Mikroskopobjektivs (7) fokussiert wird,
**dadurch gekennzeichnet, dass** die Fokussierlinse (4) zwischen dem Scanokular (3) und der Scantubuslinse (5) oder
zwischen der Scantubuslinse (5) und der hinteren Brennebene (6) des Mikroskopobjektivs (7) in den Beleuchtungsstrahlengang eingebracht werden kann,
wobei die Beleuchtungsquelleneinrichtung (10) eine Fernrohroptik (1) zum Aufweiten des kollimierten Beleuchtungsstrahlengangs (16) umfasst,
wobei die Fernrohroptik (1) derart ausgebildet ist, dass sie zur Bereitstellung der Lokalisations-Mikroskopiebeleuchtungsart aus dem Beleuchtungsstrahlengang (16) entfernt werden kann.

2. Mikroskop nach Anspruch 1, **dadurch gekennzeichnet, dass** die Fokussierlinse (4) derart ausgebildet ist, dass sie in Richtung optischer Achse (9) verschoben werden kann.

3. Mikroskop nach Anspruch 1 oder 2, **dadurch gekennzeichnet, dass** die Laserscanning-Mikroskopbeleuchtungsart eine Laserscanningmikroskopiebeleuchtungzur Konfokalmikroskopie darstellt, wobei die Beleuchtungsquelleneinrichtung (10) über eine Laserstrahlenquelle (32) verfügt.

4. Mikroskop nach einem der vorhergehenden Ansprüche, **dadurch gekennzeichnet, dass** die Lokalisations-Mikroskopbeleuchtungsart eine Lokalisationsmikroskopiebeleuchtung zu einem GSDIM-Verfahren darstellt, wobei die Beleuchtungsquelleneinrichtung (10) über eine Laserstrahlenquelle (32) verfügt.

5. Mikroskop nach einem der vorhergehenden Ansprüche, bei dem im Beleuchtungsstrahlengang (16) zwischen Scantubuslinse (5) und Mikroskopobjektiv (7) ein Teilerspiegel (19) derart angeordnet ist, dass er einen vom Präparat (8) ausgehenden Beobachtungsstrahlengang (15) auskoppelt.

6. Verfahren zur Umschaltung zwischen einer Laserscanning- und einer Lokalisations-Mikroskopiebeleuchtungsart unter Verwendung einer Mikroskopbeleuchtungseinheit (100), die die Laserscanning-Mikroskopiebeleuchtungsart dadurch bereitstellt, dass
mittels einer Beleuchtungsquelleneinrichtung (10) ein kollimierter, parallel zur optischen Achse (9) verlaufender Beleuchtungsstrahlengang (16) erzeugt wird,
mittels einer Scanspiegeleinrichtung der Beleuchtungsstrahlengang (16) in einer Ebene senkrecht zur optischen Achse abgelenkt wird und
mittels eines Scanokulars (3) und einer nachgeschalteten Scantubuslinse (5) die Scanspiegeleinrichtung (2) in eine hintere Brennebene (6) eines Mikroskopobjektivs (7) abgebildet und der Beleuchtungsstrahlengang (16) aufgeweitet wird, wobei das Mikroskopobjektiv (7) den Beleuchtungsstrahlengang (16) auf ein zu untersuchendes Präparat (8) fokussiert, wobei diese Mikroskopbeleuchtungseinheit (100) die Lokalisations-Mikroskopbeleuchtungsart dadurch bereitstellt, dass
eine Fokussierlinse (4) in den Beleuchtungsstrahlengang (16)
zwischen dem Scanokular (3) und der Scantubuslinse (5) oder
zwischen der Scantubuslinse (5) und der hinteren Brennebene (6) des Mikroskopobjektivs (7)
derart eingebracht wird, dass der Beleuchtungsstrahlengang in eine hintere Brennebene (6) eines Mikroskopobjektivs (7) fokussiert wird,
wobei die Beleuchtungsquelleneinrichtung (10) eine Fernrohroptik (1) zum Aufweiten des kollimierten Beleuchtungsstrahlengangs (16) umfasst,
wobei zur Bereitstellung der Lokalisations-Mikroskopiebeleuchtungsart die Fernrohroptik (1) aus dem Beleuchtungsstrahlengang (16) entfernt wird.

7. Verwendung eines Mikroskops gemäß Ansprüchen 3 und 4 zur Umschaltung zwischen Laserscanningmikroskopiebeleuchtung zur Konfokalmikroskopie und Lokalisationsmikroskopiebeleuchtung für ein GSDIM-Verfahren.

## Claims

1. A microscope with a microscope objective (7) and with a microscope-illuminating system for switching between a laser-scanning microscope-illuminating mode and a localisation microscope-illuminating mode with a microscope-illuminating unit (100), which, for the provision of the laser-scanning microscope-illuminating mode, comprises:
a light-source device (10) for the generation of a collimated illuminating-beam path (16) extending parallel to the optical axis (9),
a scanning-mirror device (2) for the deflection of the illuminating-beam path (16) in a plane perpendicular to the optical axis (9),
a scanning eyepiece (3) and a downstream tubular scanning lens (5) for the imaging of the scanning-mirror device (2) into a rear focal plane (6) of a microscope objective (7) and for the widening of the illuminating-beam path (16), wherein the microscope objective (7) focuses the latter onto a specimen (8) to be examined,
wherein this microscope-illuminating unit (100) comprises, for the provision of the localisation microscope-illuminating mode, a focusing lens (4), which is constituted in such a manner that it can be introduced into the illuminating-beam path (16) so that the latter is focused into the rear focal plane (6) of the microscope objective (7),
**characterised in that** the focusing lens (4) can be introduced into the illuminating-beam path between the scanning eyepiece (3) and the tubular scanning lens (5) or
between the tubular scanning lens (5) and the rear focal plane (6) of the microscope objective (7),
wherein the light-source device (10) comprises a telescope optic (1) for the widening of the collimated illuminating-beam path (16),
wherein the telescope optic (1) is constituted in such a manner that it can be removed from the illuminating-beam path (16) for the provision of the localisation microscope-illuminating mode.

2. The microscope according to claim 1, **characterised in that** the focusing lens (4) is constituted in such a manner that it can be displaced in the direction of the optical axis (9).

3. The microscope according to claim 1 or 2, **characterised in that** the laser-scanning microscope-illuminating mode represents a laser-scanning microscopy illumination for confocal microscopy, wherein the light-source device (10) comprises a laser-beam source (32).

4. The microscope according to any one of the preceding claims, **characterised in that** the localisation microscope-illuminating mode represents a localisation microscopy illumination for a GSDIM method, wherein the light-source device (10) comprises a laser-beam source (32).

5. The microscope according to any one of the preceding claims, in which a beam splitter (19) is arranged in the illuminating-beam path (16) between tubular scanning lens (5) and microscope objective (7) in such a manner that it decouples an observation beam path (15) extending outwards from the specimen (8).

6. A method for switching between a laser-scanning microscopy-illuminating mode and a localisation microscopy-illuminating mode with the use of a microscope-illuminating unit (100), which provides the laser-scanning microscopy-illuminating mode in that
a collimated illuminating-beam path (16) extending parallel to the optical axis (9) is generated by means of a light-source device (10),
the illuminating-beam path (16) is deflected in a plane perpendicular to the optical axis by means of a scanning-mirror device and,
by means of a scanning eyepiece (3) and a downstream tubular scanning lens (5), the scanning-mirror device (2) is imaged into a rear focal plane (6) of a microscope objective (7), and the illuminating-beam path (16) is widened, wherein the microscope objective (7) focuses the illuminating-beam path (16) onto a specimen (8) to be examined,
wherein this microscope-illuminating unit (100) provides the localisation microscope-illuminating mode in that
a focusing lens (4) is introduced into the illuminating-beam path (16) between the scanning eyepiece (3) and the tubular scanning lens (5) or between the tubular scanning lens (5) and the rear focal plane (6) of the microscope objective (7)
in such a manner that the illuminating-beam path is focused into a rear focal plane (6) of a microscope objective (7)
wherein the light-source device (10) comprises a telescope optic (1) for widening the collimated illuminating-beam path (16),
wherein, for the provision of the localisation microscopy-illuminating mode, the telescope optic (1) is removed from the illuminating-beam path (16).

7. A use of a microscope according to claims 3 and 4 for switching between laser-scanning microscopy illumination for confocal microscopy and localisation microscopy illumination for a GSDIM method.

## Revendications

1. Microscope muni d'un objectif de microscope (7) et d'un système d'éclairage de microscope pour basculer entre un mode d'éclairage de microscope à balayage laser et un mode d'éclairage de microscope de localisation avec une unité d'éclairage de microscope (100) comportant les éléments suivants pour fournir le mode d'éclairage de microscope à balayage laser :
un dispositif de source d'éclairage (10) pour générer un trajet de faisceau d'éclairage collimaté (16) se propageant parallèlement à un axe optique (9),
un dispositif de miroir de balayage (2) pour dévier le trajet de faisceau d'éclairage (16) dans un plan perpendiculaire à l'axe optique (9),
un oculaire de balayage (3) et une lentille de tube de balayage aval (5) pour imager le dispositif de miroir de balayage (2) dans un plan focal arrière (6) d'un objectif de microscope (7) et pour élargir le trajet de faisceau d'éclairage (16), dans lequel l'objectif de microscope (7) focalise celui-ci sur un échantillon à examiner (8),
dans lequel cette unité d'éclairage de microscope (100) comporte une lentille de focalisation (4) pour fournir le mode d'éclairage de microscope de localisation, laquelle lentille de focalisation est configurée de telle sorte qu'elle peut être insérée dans le trajet de faisceau d'éclairage (16) de sorte que celui-ci est focalisé dans le plan focal arrière (6) de l'objectif de microscope (7),
**caractérisé en ce que** la lentille de focalisation (4) peut être insérée entre l'oculaire de balayage (3) et la lentille de tube de balayage (5) ou entre la lentille de tube de balayage (5) et le plan focal arrière (6) de l'objectif de microscope (7) dans le trajet de faisceau d'éclairage,
dans lequel le dispositif de source d'éclairage (10) inclut une optique de télescope pour élargir le trajet de faisceau d'éclairage collimaté (16),
dans lequel l'optique de télescope (1) est configurée de telle sorte qu'elle peut être retirée du trajet de faisceau d'éclairage (16) pour fournir le mode d'éclairage de microscope de localisation.

2. Microscope selon la revendication 1, **caractérisé en ce que** la lentille de focalisation (4) est configurée de telle sorte qu'elle peut être déplacée en direction de l'axe optique (9).

3. Microscope selon la revendication 1 ou 2, **caractérisé en ce que** le mode d'éclairage de microscope à balayage laser fournit un éclairage de microscope à balayage laser pour une microscopie confocale, dans lequel le dispositif de source d'éclairage (10) comprend une source de faisceau laser (32).

4. Microscope selon l'une des revendications précédentes, **caractérisé en ce que** le mode d'éclairage de microscope de localisation fournit un éclairage de microscope de localisation pour un procédé GSDIM, dans lequel le dispositif de source d'éclairage (10) comprend une source de faisceau laser (32).

5. Microscope selon l'une des revendications précédentes, dans lequel un miroir séparateur (19) est agencé dans le trajet de faisceau d'éclairage (16) entre la lentille de tube de balayage (5) et l'objectif de microscope (7), de telle sorte qu'il découple un trajet de faisceau d'observation (15) provenant de l'échantillon (8).

6. Procédé pour basculer entre un mode d'éclairage de microscope à balayage laser et un mode d'éclairage de microscope de localisation en utilisant une unité d'éclairage de microscope (100) qui fournit le mode d'éclairage de microscope à balayage laser, de telle sorte que
au moyen d'un dispositif de source d'éclairage (10) est généré un trajet de faisceau collimaté (16) se propageant parallèlement à l'axe optique (9),
au moyen d'un dispositif de miroir de balayage, le trajet de faisceau d'éclairage (16) est dévié dans un plan perpendiculaire à l'axe optique et
au moyen d'un oculaire de balayage (3) et d'une lentille de tube de balayage aval (5), le dispositif de miroir de balayage (2) est reproduit en image dans un plan focal arrière (6) d'un objectif de microscope (7) et le trajet de faisceau d'éclairage (6) est élargi, dans lequel l'objectif de microscope (7) focalise le trajet de faisceau d'éclairage (16) sur un échantillon à examiner (8),
dans lequel cette unité d'éclairage de microscope (100) prépare le mode d'éclairage de microscope de localisation de telle sorte que
une lentille de focalisation (4) est insérée dans le trajet de faisceau d'éclairage (16) entre l'oculaire de balayage (3) et la lentille de tube de balayage (5) ou entre la lentille de tube de balayage (5) et le plan focal arrière (6) de l'objectif de microscope (7), de sorte que le trajet de faisceau d'éclairage est focalisé dans un plan focal arrière (6) d'un objectif de microscope (7),
dans lequel le dispositif de source d'éclairage (10) inclut une optique de télescope (1) pour élargir le trajet de faisceau d'éclairage collimaté (16),
dans lequel l'optique de télescope (1) est retirée du trajet de faisceau d'éclairage (16) pour fournir le mode d'éclairage de microscope de localisation.

7. Utilisation d'un microscope selon les revendications 3 et 4 pour basculer entre un éclairage de microscope à balayage laser pour une microscopie confocale, et un éclairage de microscope de localisation pour un procédé GSDIM.
